# EUROPEAN PATENT SPECIFICATION

(11) **EP 0 488 763 B1**
(45) Date of publication and mention of the grant of the patent: **09.08.1995**
(21) Application number: 91311077.1
(22) Date of filing: 29.11.1991
(51) Int. Cl.: B05D 7/22

(54) **Method of applying a resin lining to the inner surface of a porcelain housing**
Verfahren zur Harzbeschichtung der Innenoberfläche von Porzellanisolatoren
Procédé pour appliquer une résine pour revêtement interne des isolateurs en porcelaine

(30) Priority: 30.11.1990 JP 340786/90
(43) Date of publication of application: 03.06.1992
(73) Proprietor: NGK INSULATORS, LTD., Nagoya City Aichi Pref. (JP); MOON-STAR CHEMICAL CORPORATION, Kurume City, Fukuoka Pref. (JP)
(72) Inventor: Watanabe, Akihiro, Hashima City, Gifu Pref. (JP); Asai, Keiichi, Kasugai City, Aichi Pref. (JP); Matsuura, Yasunori, Kasugai City, Aichi Pref. (JP); Kawano, Nagahiro, Kurume City, Fukuoka Pref. (JP); Sugi, Masafumi, Yame City, Fukuoka Pref. (JP)
(74) Representative: Paget, Hugh Charles Edward

(56) References cited:
- DE-B- 1 080 918
- US-A- 1 892 815

## Description

The present invention relates to a method of applying a resin lining to the inner surface of a porcelain housing so as to obtain a resin lining layer having a uniform thickness.

When a porcelain housing used for insulation of apparatuses in which insulation gases are filled under high pressure is broken for whatever reason, a secondary disaster sometimes occurs by pieces of the porcelain housing being scattered due to the pressure of the insulation gases. Therefore, recently, a resin lining layer for preventing an explosion is generally arranged on an inner surface of the porcelain housing.

As for the methods of applying a resin lining to the inner surface of a porcelain housing, one method is to spray resin onto the inner surface while the porcelain housing is fixed in a sideways position. A second method is to spray resin onto, or cause resin to flow over, an inner surface of the porcelain housing and effect a lining operation by means of centrifugal force while the porcelain housing is rotated with respect to a horizontal axis at a predetermined velocity.

However, in the first method mentioned above, since the sprayed resin sometimes flows down by gravity, there is a drawback that it is not possible to obtain a resin lining layer having a uniform thickness. In the second method mentioned above, if the porcelain housing has a uniform inner diameter and the viscosity of the resin is known, it is possible to obtain a resin lining layer having a fairly uniform thickness. However, if the porcelain housing has a tapered shape wherein the inner diameter is gradually varied, there is a drawback in that it is not possible to obtain a resin lining layer having a uniform thickness, because the applied resin flows towards the region having a larger inner diameter.

The invention aims at least partly at eliminating the drawbacks mentioned above, and seeks to provide a method of applying a resin lining to the inner surface of a porcelain housing, which can realise a resin lining layer having a more uniform thickness even on an inner surface of a tapered porcelain housing.

According to one aspect of the invention, a method of applying a resin lining to the inner surface of a porcelain housing, comprises the steps set out in claim 1.

For a better understanding of the invention, reference is made to the accompanying drawing in which:

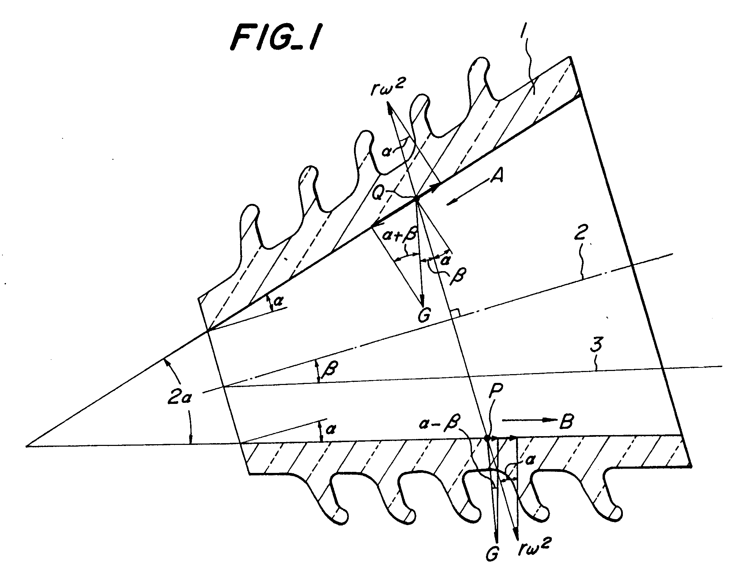

Fig. 1 is a schematic view showing, by vector lines, a gravity and a centrifugal force acting on resins in a lining layer according to the invention.

Hereinafter, the present invention will be explained in detail with reference to the drawing.

Fig. 1 is a schematic view showing, by vector lines, gravity and a centrifugal force acting on the resin in a lining according to the invention. In Fig. 1, contrary to conventional common sense, a porcelain housing 1 is rotated during a resin lining operation in such a manner that the rotation axis 2 of the porcelain housing 1 having a tapered shape is inclined upward with respect to a horizontal line 3. Moreover, it is assumed that P on an inner surface of the porcelain housing 1 is a position at which resin is supplied from a nozzle not shown, and the position P is moved to a position Q after the porcelain housing 1 is rotated by 180°.

In this case, the acceleration acting on the resin supplied from the nozzle to an inner surface of the porcelain housing 1 is described by gravity acceleration G and centrifugal acceleration rω² wherein r is the inner radius of the porcelain housing and ω is the angular velocity of the porcelain housing 1. Thus, a component of force along an inner surface direction acts to move resin along the inner surface of the porcelain housing 1 and in axis direction.

As shown in Fig. 1, if the taper angle of the porcelain housing 1 is assumed to be 2α, at the position P, the component of force of gravity acceleration G along the inner surface and in axis direction is $\text{G·sin(α-β)}$ , and the component of force of the centrifugal acceleration along the same direction is $\text{rω²sinα}$ . Equally, at the position Q, the component of force of gravity acceleration G along the inner surface and in axis direction is $\text{G·sin(α+β)}$ , and the component of force of the centrifugal acceleration along the same direction is $\text{-rω²sinα}$ . As a result, the acceleration B at the position P acting to move resin along the inner surface and in axis direction is obtained as follows.$\text{B = G·sin(α-β) + rω²sinα}$ Equally the acceleration A at the position Q acting to move resin along the inner surface and in inverse axis direction as that of the acceleration B is obtained as follows.$\text{A = G·sin (α+β) - rω²sinα}$ In this manner, the resin at the position P is moved toward the portion having a larger inner diameter, but the resin at the position Q is moved toward the portion having a smaller inner diameter. Therefore, if the magnitude of acceleration B is equal to that of acceleration A, these accelerations cancel each other out during one rotation of the porcelain housing 1, and thus the resin is not moved along the inner surface and toward axis direction at all during rotation. If the inclination angle β of the rotation axis 2 is determined as satisfying a relation A = B from the equations (1) and (2), the following equation (3) is obtained.$\text{sinβ = rω²tanα/G}$ However, the equation (3) includes a variable r, and the variable r is varied corresponding to the nozzle movement inside the tapered porcelain housing. Therefore, if the inclination angle β is once determined for a certain position of the nozzle from the above equation (3), the resin flow starts at another position of the nozzle because the variable r is different at the other position.

Therefore, according to the invention, by varying one or both of the inclination angle β and the angular velocity ω,i.e. the rate of rotation of the porcelain housing,in such a manner that they correspond to the variation of r which corresponds to the nozzle movement, the above equation (3) is always satisfied regardless of the nozzle movement, and then the resin flow is eliminated.

Moreover, if β and ω are varied by moving the nozzle position before the resin supplied from the nozzle hardens, resin flow also occurs. Therefore, in order to eliminate the resin flow much more, it is preferred that the viscosity of the resin is controlled within a range of 0,5 - 4,0 Pa·s (500∼4000 cps). Thus, after application, the resin is swiftly hardened by limiting the time of resin gelation to within 20 minutes. Further, the moving speed of the nozzle is determined by considering the thickness of the resin lining, the amount of resin supplied from the nozzle, and the radius of the porcelain housing 1. For example, the amount of resin supplied from the nozzle is set corresponding to the radius of the porcelain housing 1 so as to effect a resin gelation within a period in which the moving nozzle remains in a region where the resin flow is eliminated due to the viscosity of the resin.

To perform the present invention industrially, first, an inner surface of the porcelain housing is washed and cleaned, and a primer and an adhesive agent are applied to the inner surface. Then, the porcelain housing is pre-heated to 70∼100°C. Then, the porcelain housing is fitted to a rotation apparatus which can vary the rotation angle and the number of rotations, the porcelain housing is rotated, and the nozzle is moved from one end to the other end while the resin is caused to flow from the nozzle.

As for the resin to be used, use may be made of a polyurethane resin in which 5∼8 parts by weight of a curing agent is mixed with respect to 100 parts by weight of a prepolymer. In this case, before the mixing operation, the prepolymer is pre-heated to 70∼85°C, and the curing agent is pre-heated to 30∼40°C. The viscosity of the resin just after the mixing operation is 1.2 - 3.5 PaS (1200∼3500 cps), and the gelation time thereof is about 10∼20 minutes. It should be noted that the lining layer may have a multi-layer construction and further two kinds of resin each having a different hardness and elasticity can be stacked with each other. After the lining operation, if a formed lining layer is maintained at 80∼100°C for 10∼15 hours so as to be hardened, it is possible to obtain a porcelain housing of anti-explosion type with a resin or elastomer lining layer having a uniform thickness.

As mentioned above in detail, according to the invention, by varying the angle of the rotation axis or the rate of rotation around it in accordance with the variation of the radius of the tapered porcelain housing, components of force of gravity and the centrifugal force acting on a resin lining layer at any two positions separated by 180° therebetween on the inner surface can be cancelled with respect to each other at any location on an inner surface of the porcelain housing during rotation. In this manner, resin flow of the resin lining layer can be eliminated, and thus it is possible to obtain a resin lining layer having a uniform thickness even for porcelain housings having a tapered shape.

As a result, the present invention can eliminate the drawbacks of a conventional porcelain housing, and thus contributes to an industrial improvement.

## Claims

1. A method of applying a resin lining to an inner surface of a porcelain housing (1), comprising the steps of:
rotating the porcelain housing (1) about a rotation axis (2) and delivering resin onto the inner surface of the porcelain housing (1) from a nozzle during rotation of the porcelain housing (1) characterised in that
the porcelain housing (1) has a tapered shape and the rotation axis (2) of the porcelain housing (1), in a direction from a region of the housing of smaller inner diameter to a region having a larger inner diameter, is inclined upward with respect to a horizontal line (3), and the inclination angle (β) and/or the rotation rate (ω) are controlled in accordance with the inner diameter of the porcelain housing (1) corresponding to the nozzle position.

2. A method according to claim 1, wherein said controlling of the inclination angle (β) and/or the rotation rate (ω) is performed in such a manner that axial components of force of gravity and the centrifugal force acting on the resin lining layer at any two positions separated by 180° therebetween on the inner surface can be cancelled with respect to each other at any location on the inner surface of the porcelain housing (1) during rotation.

3. A method according to claim 1, wherein said resin is a polyurethane resin in which 5-8 parts by weight of a curing agent is mixed with respect to 100 parts by weight of a prepolymer.

4. A method according to claim 3, wherein said prepolymer is pre-heated to 70-85°C and said curing agent is pre-heated to 30-40°C.

5. A method according to claim 1, wherein said resin has a viscosity of 1.2-3.5 Pa.s (1200-3500 cps) when applied.

## Patentansprüche

1. Verfahren zum Aufbringen einer Harzauskleidung auf eine Innenfläche eines Porzellangehäuses (1), folgende Schritte umfassend:
Rotieren des Porzellangehäuses (1) um eine Rotationsachse (2) und Aufbringen von Harz aus einer Düse auf die Innenfläche des Porzellangehäuses (1) während der Rotation des Porzellangehäuses (1),
dadurch gekennzeichnet, daß
das Porzellangehäuse (1) mit einer konischen Form versehen ist und die Rotationsachse (2) des Porzellangehäuses (1) in einer Richtung von einem Bereich des Gehäuses (1) mit kleinerem Innendurchmesser zu einem Bereich mit einem größeren Innendurchmesser bezogen auf eine horizontale Linie (3) nach oben geneigt ist und der Neigungswinkel (β) und/oder die Rotationsgeschwindigkeit (ω) gemäß dem Innendurchmesser des Porzellangehäuses (1) entsprechend der Düsenposition gesteuert werden.

2. Verfahren nach Anspruch 1, worin das Steuern des Neigungswinkels (β) und/oder der Rotationsgeschwindigkeit (ω) auf solche Art durchgeführt wird, daß während der Rotation axiale Komponenten der Gravitationskraft und Zentrifugalkraft, die in zwei beliebigen, durch 180° dazwischen getrennten Positionen an der Innenfläche auf die Harzauskleidungsschicht wirken, einander an jeder Stelle an der Innenfläche des Porzellangehäuses (1) aufheben können.

3. Verfahren nach Anspruch 1, worin das Harz ein Polyurethanharz ist, in das 5-8 Gewichtsteile eines Härters bezogen auf 100 Gewichtsteile eines Präpolymers gemischt werden.

4. Verfahren nach Anspruch 3, worin das Präpolymer auf 70-85°C vorgewärmt wird und der Härter auf 30-40°C vorgewärmt wird.

5. Verfahren nach Anspruch 1, worin das Harz beim Aufbringen eine Viskosität von 1,2-3,5 Pa.s (1200-3500 cP) aufweist.

## Revendications

1. Méthode d'application d'un revêtement de résine à une surface interne d'un boîtier de porcelaine (1), comprenant les étapes de :
faire tourner le boîtier de porcelaine (1) autour d'un axe de rotation (2) et fournir à la résine à la surface interne du boîtier de porcelaine (1) à partir d'une tubulure pendant la rotation du boîtier de porcelaine (1) caractérisée en ce que
le boîtier de porcelaine (1) ayant une forme effilée est prévu et l'axe de rotation (2) du boîtier de porcelaine (1) dans une direction d'une région du boîtier (1) de plus petit diamètre interne jusqu'à une région ayant un plus grand diamètre interne est incliné vers le haut par rapport à un ligne horizontale (3) et l'angle d'inclinaison (β) et/ou la vitesse de rotation (ω) sont contrôlés selon le diamètre interne du boîtier de porcelaine (1) selon la position de la tubulure.

2. Méthode selon la revendication 1 où le contrôle de l'angle d'inclinaison (β) et/ou de la vitesse de rotation (ω) est accompli de façon que les composantes axiales de la force de la gravité et de la force centrifuge agissant sur la couche de revêtement de résine en deux positions séparées de 180° sur la surface interne puissent être annulées l'une par rapport à l'autre en tout emplacement sur la surface interne du boîtier de porcelaine (1) pendant sa rotation.

3. Méthode selon la revendication 1 où ladite résine est une résine de polyuréthanne dans laquelle on mélange 5-8 parties en poids d'un agent de durcissement par rapport à 100 parties en poids d'un prépolymère.

4. Méthode selon la revendication 3 où ledit prépolymère est préchauffé à 70-85°C et ledit agent de durcissement est préchauffé à 30-40°C.

5. Méthode selon la revendication 1 où ladite résine a une viscosité de 1,2-3,5 Pa.s (1200-3500 cps) lorsqu'elle est appliquée.
